# EUROPEAN PATENT APPLICATION

(11) **EP 2 242 283 A2**
(43) Date of publication of application: **20.10.2010**
(21) Application number: 09180215.7
(22) Date of filing: 21.12.2009
(51) Int. Cl.: H04Q 9/00

(54) **Wireless Battery Sensor**

(30) Priority: 22.01.2009 US 357662
(71) Applicant: Delphi Technologies, Inc., Troy, MI 48007 (US)
(72) Inventor: Shaffer, Gerald A., West Farmington, OH 44491 (US); Caputo, John, Canfield, OH 44406 (US)
(74) Representative: Denton, Michael John

(57) **Abstract**

A sensor includes a detector circuit configured to measure current, voltage, and temperature of a battery. A processor is in communication with the detector circuit and is configured to convert the current, voltage, and temperature into battery information. A transmitter is in communication with the processor and is configured to wirelessly transmit the battery information. A receiver is in wireless communication with the transmitter and is configured to receive the battery information and control an external component in response to the battery information. A method includes measuring the current, voltage, and temperature of the battery, converting the current, voltage, and temperature into battery information, wirelessly transmitting the battery information to the receiver, and controlling the external component in response to the battery information.

## Description

### TECHNICAL FIELD

Battery sensors are used in various industries to measure the state of charge and/or health of a battery. The battery's state of charge indicates how long the battery can continue to operate before losing its charge. The state of health indicates the battery's life cycle and the condition of the battery relative to a new battery. The battery sensor may determine the state of charge and/or health using various characteristics of the battery, and display the battery information on a display screen. Providing consumers with this information allows the consumer to predict when the battery will lose its charge and plan accordingly.

### BACKGROUND OF THE INVENTION

In one example, battery sensors are used in the automotive industry so that drivers know when their battery needs to be replaced. As vehicles become more dependent upon electricity as a source of energy, knowing the state of charge and/or health of the battery is increasingly more important. Specifically, being able to predict battery failure allows drivers to avoid the inconvenience and safety problems of being stranded. Battery sensors used in other industries are equally as valuable. Outside the automotive industry, battery sensors may be used in marine applications, ATVs, motorcycles, military applications, tractors, landscaping equipment, earth-moving equipment, recreational vehicles, commercial vehicles, and various consumer products using batteries, among others.

Despite their importance, battery sensors add cost and weight to products. In particular, the battery sensor uses wires to communicate with other electrical components. Because of size constraints, the locations and lengths of the wires must be carefully designed. As a result, it is very difficult for the battery sensor to be installed as an aftermarket device. Moreover, wires limit the availability of the information to the consumer. For example, the display is hardwired to the battery sensor so, in an automotive application, the driver must be in the car to see the battery information.

Accordingly, a battery sensor is needed that that can communicate battery information without the added cost and weight of wires, can be installed as an aftermarket device, and does not require the consumer to be near the battery sensor to read the battery information.

### SUMMARY OF THE INVENTION

A sensor includes a detector circuit configured to measure current, voltage, and temperature of a battery. A processor is in communication with the detector circuit and is configured to convert the current, voltage, and temperature into battery information. A transmitter is in communication with the processor and is configured to wirelessly transmit the battery information to a receiver in wireless communication with the transmitter. The receiver is configured to receive the battery information and control an external component in response to the battery information.

Furthermore, a battery includes a first terminal and a second terminal disposed. A sensor is disposed on the first terminal and has a transmitter configured to wirelessly transmit battery information and a receiver in wireless communication with the transmitter. The receiver is configured to receive the battery information and control an external component in response to the battery information.

In addition, a method includes measuring a current, voltage, and temperature of a battery, converting the current, voltage, and temperature into battery information, wirelessly transmitting the battery information to a receiver in communication with an external component, and controlling the external component in response to the battery information.

### BRIEF DESCRIPTION OF THE DRAWINGS

The foregoing description will be understood more completely from the following detailed description of the exemplary drawings, in which:

Figure 1 is a schematic diagram of an exemplary battery sensor configured to control external components, according to an embodiment;

Figure 2A is an illustration of an exemplary fob housing a receiver, according to an embodiment;

Figure 2B is an illustration of another exemplary fob housing the receiver, according to an embodiment; and

Figure 3 is a flowchart illustrating an exemplary method of monitoring and using battery characteristics, according to an embodiment.

### DESCRIPTION OF THE PREFERRED EMBODIMENTS

A battery sensor includes a detector circuit that measures current, voltage, and temperature of a battery. A processor converts the current, voltage, and temperature into battery information. A transmitter wirelessly transmits the battery information to a receiver that may control an external component in response to the battery information. Wireless communication between the transmitter and receiver allows the battery information to be easily viewed and/or communicated to external components. In addition, wireless communication makes installing and/or replacing the battery sensor easier, reduces the number of wires needed to communicate the battery information to the external components, reduces cost, and reduces overall product weight. Moreover, the battery sensor provides more flexibility since it is not constrained by traditional wiring requirements.

Various industries may benefit from the battery sensor disclosed herein. In one exemplary approach, vehicle repair shops, oil change facilities, tire dealerships, or battery resellers may use the receiver to inform a vehicle driver of the battery's state of charge or state of health as a courtesy or safety service, and offer a new battery or aftermarket battery sensor if necessary. Depending on the industry, the battery sensor, including the receiver (and/or key fob) housing the receiver, may need to be formed from a durable, shock-resistant, and/or waterproof material. Moreover, in some applications, it may even be beneficial for the key fob be able to float.

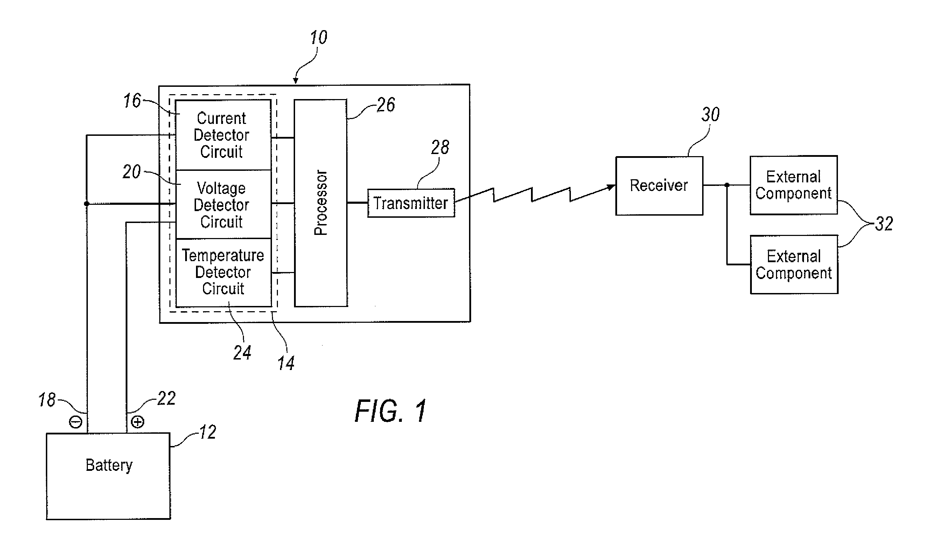

Figure 1 is an exemplary schematic diagram of a battery sensor 10 electrically connected to a battery 12. The battery sensor 10 is a stand-alone device that may be disposed on the battery 12, and in one exemplary approach, mounted onto one of the battery 12 terminals. In another exemplary approach, the sensor 10 may be disposed within a cable connected to one of the battery 12 terminals. In either of these embodiments, the battery sensor 10 may be installed as an aftermarket device. The battery sensor 10 includes a detector circuit 14 configured to measure current, voltage, and temperature of the battery 12. In particular, the detector circuit 14 includes a current detector circuit 16 configured to measure current flow out of a first terminal 18. The first terminal 18 may be the "negative" terminal of the battery 12. In one exemplary approach, the current detector circuit 16 includes a shunt resistor in series with the first terminal 18, and a voltage drop across the shunt resistor indicates the current through the first terminal 18. In addition, the detector circuit 14 may include a voltage detector circuit 20 configured to measure the voltage across the first terminal 18 and a second terminal 22, which may be the "positive" terminal of the battery 12. Furthermore, the detector circuit 14 may include a temperature detector 24 configured to measure the temperature of the battery 12. The temperature detector 24 may measure, either directly or indirectly, the temperature of the battery 12. In one exemplary approach, the temperature detector 24 is measures the temperature of a metal post of the battery 12, and uses that temperature to approximate the internal electrolyte temperature of the battery 12. Alternatively, the temperature detector 24 may measure the temperature of a battery casing to approximate the internal battery 12 temperature. It is to be appreciated that other temperatures may be used to approximate and/or compensate for the internal battery 12 temperature, including ambient air temperature around the battery 12, current through the battery 12, or the temperature of other components near the battery 12.

In one exemplary approach, a processor 26 is in communication with the detector circuit 14. The processor 26 accesses a non-volatile memory device that stores software. The processor 26 executes the code stored in the memory device and converts the current, voltage, and temperature measured into battery information. The battery information may include the state of charge of the battery 12 and/or the state of health of the battery 12. The state of charge indicates how long the battery 12 can continue to operate before losing its charge. The state of health indicates the life cycle and the condition of the battery 12 relative to a new battery. The processor 26 may include any computational device, such as a microprocessor, capable of converting data received from the detector circuit 14 into the battery information.

A transmitter 28 is in communication with the processor 26 and is configured to wirelessly transmit the battery information. Alternatively, the transmitter 28 may transmit battery information directly from the components of the detector circuit 14 without the use of the processor 26. In this embodiment, the processor 26 and/or transmitter 28 need not be part of the sensor 10. The transmitter 28 may transmit the battery information using IEEE 802.11, IEEE 802.15.4, or any other communication protocol. Also, the transmitter 28 may include a transceiver.

A receiver 30 is in wireless communication with the transmitter 28 and is configured to receive the battery information and control an external component 32 in response to the battery information. In this embodiment, the receiver 30 may be in wired or wireless communication with the external component 32. Moreover, the receiver 30 may control one or more external components 32. Alternatively, the receiver 30 may be part of one or both external components 32. For example, the external component 32 may be an electronic control unit or computer housing the receiver 30.

In one exemplary approach, when used in the automotive industry, the receiver 30 may control an alternator based on the battery information. Alternators are used in vehicles to convert mechanical energy into AC electrical energy that may be used to charge the battery 12 and provide electrical energy to other electrical devices in the vehicle while the engine is running. However, continuing to charge the battery 12 when it is fully charged could reduce the lifespan of the battery 12, as well as the vehicle's fuel efficiency. Since the battery information indicates when the battery 12 is fully charged, the receiver 30 may instruct the alternator to stop charging the battery 12 when it is no longer necessary. The battery sensor 10 may similarly control other external components 32 in automotive and non-automotive applications.

In another exemplary approach, multiple battery sensors 10 may be used with multiple batteries 12 in a product, such as a hybrid vehicle. In this embodiment, each battery 12 could have a unique identification code that is transmitted by each of the battery sensors 10. This way, a single receiver 30 can be used to distinguish which signal is coming from which battery 12 based on the unique identification code. Alternatively, the receiver 30 may be able to distinguish between battery sensors 10 based on the strength of the signal. For instance, the receiver 30 may use the strength of the signal to ensure that it is not receiving a signal from a battery sensor 10 in a different product (e.g., another vehicle). In another embodiment, when multiple receivers 30 are used, the transmitter 28 may encrypt the battery information before transmitting so that only the receiver 30 with the correct decryption algorithm could read the battery information.

Accordingly, the battery sensor 10 may be used in various circumstances for various purposes, including performing a variety of different control and/or display functions. These functions may include transmitting and/or displaying text or other types of messages, enabling and/or disabling power sources such as generators or alternators, adjusting power output from power sources, enabling and/or disabling various loads driven by the battery 12, adjusting power output from the battery 12 to the various loads, activating one or more auxiliary batteries 12, enabling and/or disabling an auxiliary power system like an air-breathing, HC fuel-powered engine, or a fuel cell.

When installed on the battery 12, the battery sensor 10 may require calibration. In one embodiment, the battery 12 may store battery-type data in flash or other non-volatile memory storage device, and the battery sensor 10 can detect the battery-type data and automatically select the correct calibration data set. Alternatively, the battery sensor 10 may receive the battery-type data as a diagnostic parameter. Moreover, reference information, including tables, curves, maps, tabular data, polynomial expressions, etc., that define the expected relationships between the measured current, voltage, and temperature and battery information, including the state of health and/or state of charge, for specific battery models, serial numbers, types, etc., may be stored in the flash memory or elsewhere and be in communication with the sensor 10.

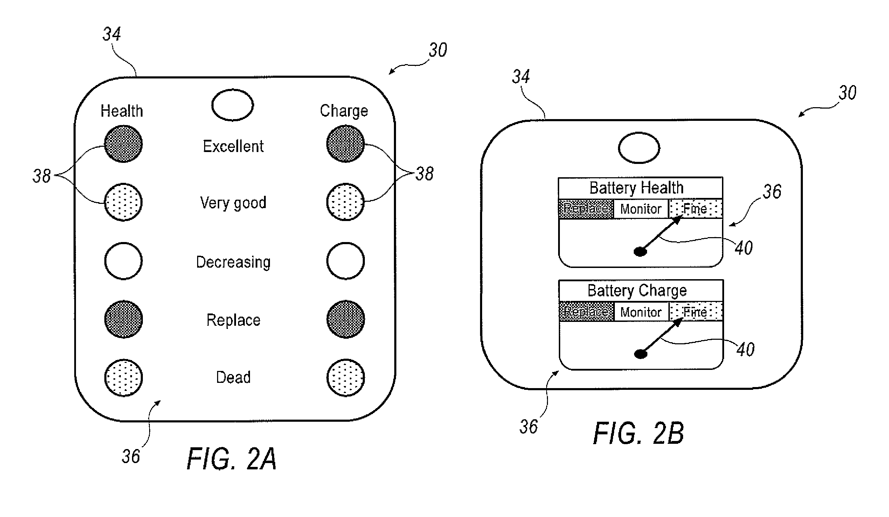

Referring to Figures 2A and 2B, it is to be appreciated that the receiver 30 may communicate the battery information to and control a fob 34. The receiver 30 may be housed in the fob 34, which may include a display device 36 that is configured to display the battery and/or other information. The fob 34 may be hand-held and portable. In addition, the fob 34 may be shielded and filtered to permit a specific battery 12 to be read, such as the battery 12 nearest to the fob 34. In addition to receiving the battery information, the fob 34 may further be configured to store the reference information defining the expected relationship between the measured current, voltage, and temperature and the battery information, compare the measured current, voltage, and temperature to the reference information, and perform one or more functions in response to comparing the measured current, voltage and temperature to the reference information. For example, as illustrated in Figure 2A, the fob 34 includes a plurality of light emitting diodes (LEDs) 38 that indicate the state of charge or the state of health of the battery 12. As the state of charge and/or state of health changes, different LEDs 38 or combinations of LEDs 38 are illuminated. It is to be appreciated that the LEDs 38 may be different colors (e.g., red, yellow, and green) and/or include a flashing indicator to indicate the state of charge and/or state of health of the battery 12. In one exemplary approach, the display device 36 may indicate when the state of charge and/or state of health is "Excellent," "Very Good," "Decreasing," "Replace," or "Dead." As illustrated in Figure 2B, the fob 34 may alternatively include an indicator 40 or hand that points to the state of charge or state of health of the battery 12. For example, the indicator 40 may indicate that the battery 12 is "Fine," "Monitor," meaning that the battery 12 should be monitored, or "Replace," meaning that the battery 12 needs to be replaced. The display device 36 on the fob 34 may also include a "Strength of Wireless Signal" field or other features to confirm that the proper battery sensor 10 is being read. In another embodiment, the fob 34 may receive and display text messages indicating the battery information transmitted by the sensor 10.

The sensor 10 may be used to control the external components 32 and/or transmit information to the fob 34. However, instead of the sensor 10 communicating directly with the fob 34 with a built-in transmitter 28, in one embodiment, the transmitter 28 may be disposed on one or more of the external components 32. In this embodiment, the external component 32 may be in wired communication with the processor 26 and the external component 32 may use the transmitter 28 to wirelessly communicate the battery information to the fob 34. In one exemplary approach, the external component 32 may be an electronic control unit (ECU) that handles wireless communication to the fob 34. In other words, the transmitter 28 may be disposed on the ECU instead of on the sensor 10. For example, although not limited to the automotive industry, the ECU may be a body ECU, engine ECU, or another dedicated ECU within a vehicle to accumulate not only feedback from the sensor 10, but information from other vehicle systems that may be transmitted to the fob 34 for a user to interpret. For example, in addition to battery information, the ECU may also transmit information indicating tire pressure, whether the vehicle doors are locked, whether the windows are up or down, whether the engine is running, and/or the vehicle cabin temperature, among others. If other information besides battery information is transmitted to the fob 34, the display device 36 would include the appropriate LEDs 38 or indicators 40. It is to be appreciated that this embodiment is merely exemplary and may be used in other industries and consumer products besides vehicles.

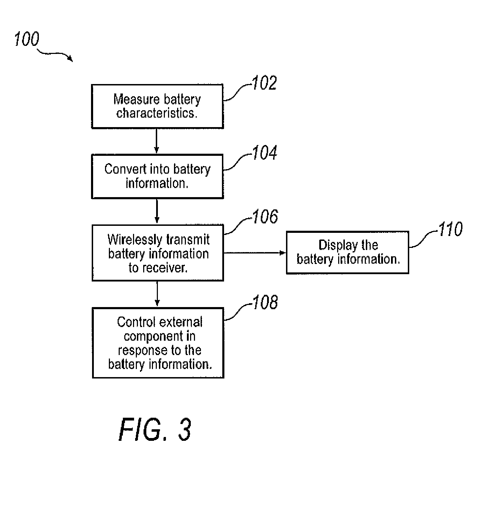

Referring to Figure 3, a method 100 includes a step 102 of measuring the current, voltage, and temperature of the battery 12. Then, the method 100 includes a step 104 of converting the current, voltage, and temperature into battery information. Once converted, the method 100 includes a step 106 ofwirelessly transmitting the battery information to a receiver 30 in communication with an external component 32 and a step 108 of controlling the external component 32 in response to the battery information. In addition, the method 100 may also include a step 110 of displaying the battery information on the fob 34. In one embodiment, the step 108 of controlling the external component 32 in response to the battery information is further defined as controlling the fob 34. In this embodiment, the sensor 10 may merely display the battery information on the fob 34 as indicated at step 100. Alternatively, the sensor 10 may control the external component 32 as indicated at step 108 without displaying the information on the fob 34.

The method 100 may include other steps (not shown). For example, the method 100 may include storing the reference information defining the expected relationships between the measured current, voltage, and temperature to the state of charge and/or state of health of the battery 12 for specific battery models, serials numbers, types, etc. Moreover, the method 100 may include comparing the measured current, voltage, and temperature to the reference information to ascertain the output information that may be relevant to a user or that may be useful for controlling related external components 32, including the fob 34. The step 108 of controlling the external component 32 may include performing one or more control and/or display functions in response to comparing the measured current, voltage, and temperature to the reference information. Moreover, the method 100 may include initiating a test and/or evaluation sequence in response to a user-initiated query from the fob 34. In one exemplary approach, the fob 34 may be configured to perform these or other steps.

Computing devices such as, but not limited to, processing device 26 may employ any of a number of known computer operating systems, including, but by no means limited to, known versions and/or varieties of the Microsoft Windows® operating system, the Unix operating system (e.g., the Solaris® operating system distributed by Sun Microsystems of Menlo Park, California), the AIX UNIX operating system distributed by International Business Machines of Armonk, New York, and the Linux operating system. Computing devices may include any one of a number of computing devices known to those skilled in the art.

Computing devices generally each include instructions executable by one or more computing devices. Computer-executable instructions may be compiled or interpreted from computer programs created using a variety of known programming languages and/or technologies, including, without limitation, and either alone or in combination, Java™, C, C++, Visual Basic, Java Script, Perl, etc. In general, a processor (e.g., a microprocessor) receives instructions, e.g., from a memory, a computer-readable medium, etc., and executes these instructions, thereby performing one or more processes, including one or more of the processes described herein. Such instructions and other data may be stored and transmitted using a variety of known computer-readable media.

A computer-readable medium includes any medium that participates in providing data (e.g., instructions), which may be read by a computer. Such a medium may take many forms, including, but not limited to, non-volatile media, volatile media, and transmission media. Non-volatile media include, for example, optical or magnetic disks and other persistent memory. Volatile media include dynamic random access memory (DRAM), which typically constitutes a main memory. Transmission media include coaxial cables, copper wire and fiber optics, including the wires that comprise a system bus coupled to the processor. Transmission media may include or convey acoustic waves, light waves and electromagnetic emissions, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH-EEPROM, any other memory chip or cartridge, a carrier wave as described hereinafter, or any other medium from which a computer can read.

The above description is intended to be illustrative and not restrictive. Many alternative approaches or applications other than the examples provided would be apparent to those of skill in the art upon reading the above description. The scope of the invention should be determined, not with reference to the above description, but should instead be determined with reference to the appended claims, along with the full scope of equivalents to which such claims are entitled. It is anticipated and intended that future developments will occur in the arts discussed herein, and that the disclosed systems and methods will be incorporated into such future examples. In sum, it should be understood that the invention is capable of modification and variation and is limited only by the following claims.

The present embodiments have been particularly shown and described, which are merely illustrative of the best modes. It should be understood by those skilled in the art that various alternatives to the embodiments described herein may be employed in practicing the claims without departing from the spirit and scope as defined in the following claims. It is intended that the following claims define the scope of the invention and that the method and apparatus within the scope of these claims and their equivalents be covered thereby. This description should be understood to include all novel and non-obvious combinations of elements described herein, and claims may be presented in this or a later application to any novel and non-obvious combination of these elements. Moreover, the foregoing embodiments are illustrative, and no single feature or element is essential to all possible combinations that may be claimed in this or a later application.

All terms used in the claims are intended to be given their broadest reasonable constructions and their ordinary meanings as understood by those skilled in the art unless an explicit indication to the contrary is made herein. In particular, use of the singular articles such as "a," "the," "said," etc. should be read to recite one or more of the indicated elements unless a claim recites an explicit limitation to the contrary.

## Claims

1. A sensor (10) comprising:
a detector circuit (14) configured to measure current, voltage, and temperature of a battery (12);
a processor (26) in communication with said detector circuit (14) and configured to convert the current, voltage, and temperature into battery information;
a transmitter (28) in communication with said processor (26) and configured to wirelessly transmit said battery information; and
a receiver (30) in wireless communication with said transmitter (28) and configured to receive said battery information and control an external component (32) in response to said battery information.

2. A sensor (10) as set forth in claim 1, wherein said detector circuit (14) includes a current detector circuit (16) configured to measure current flow out of the battery (12), and/or wherein said detector circuit (14) includes a voltage detector circuit (20) configured to measure the voltage of the battery (12) and/or wherein said detector circuit (14) includes a temperature detector (24) configured to measure the temperature of the battery (12).

3. A sensor (10) as set forth in claim 1, wherein said battery information includes state of charge of the battery (12) and/or wherein said battery information includes state of health of the battery (12).

4. A sensor (10) as set forth in claim 1, wherein said receiver (30) includes a fob (34) housing a display device (36) and wherein said display device (36) is configured to display said battery information.

5. A sensor (10) as set forth in claim 4, wherein said fob (34) is configured to receive the battery information, store reference information defining an expected relationship between the measured current, voltage, and temperature and battery information, compare the measured current, voltage, and temperature to the reference information, and perform one or more functions in response to said step of comparing the measured current, voltage, and temperature to the reference information.

6. A sensor (10) as set forth in claim 1, wherein said receiver (30) is in wired communication with the external component (32).

7. A sensor (10) as set forth in claim 1, wherein said transmitter (28) communicates with said receiver (30) using IEEE 802.11 or IEEE 802.15.4 protocol.

8. A battery (12) comprising:
a first terminal (18) and a second terminal (22); and
a sensor (10) as claimed in any one of claims 1 to 7 disposed on said first terminal (18).

9. A method (100) comprising:
measuring (102) a current, voltage, and temperature of a battery (12);
converting (104) the current, voltage, and temperature into battery information;
wirelessly transmitting (106) the battery information to a receiver (30) in communication with an external component (32); and
controlling (108) the external component (32) in response to the battery information.

10. A method (100) as set forth in claim 9, further comprising displaying (110) the battery information on a fob (34).

11. A method (100) as set forth in claim 9, further comprising storing reference information defining expected relationships between the measured current, voltage, and temperature of the battery (12) and the battery information.

12. A method (100) as set forth in claim 9, further comprising comparing the measured current, voltage, and temperature to the reference information.

13. A method (100) as set forth in claim 12, wherein controlling the external component (32) includes performing one or more functions in response to comparing the measured current, voltage, and temperature to the reference information.

14. A method (100) as set forth in claim 9, further comprising initiating a test sequence in response to a user-initiated query from a fob (34).

15. A method (100) as set forth in claim 9, further comprising wirelessly transmitting the battery information to a fob (34).
